Europäisches Patentamt

European Patent Office

Office européen des brevets

(19)

(11) Veröffentlichungsnummer: **0 186 800**
**B1**

(12) # EUROPÄISCHE PATENTSCHRIFT

(45) Veröffentlichungstag der Patentschrift:
02.08.89

(51) Int. Cl.⁴: **C 04 B 41/85, H 05 B 7/085**

(21) Anmeldenummer: 85115338.7

(22) Anmeldetag: 03.12.85

(54) Verfahren zum Beschichten von Kohlenstoff- und Graphitkörpern.

(30) Priorität: 19.12.84 DE 3446286

(43) Veröffentlichungstag der Anmeldung:
09.07.86 Patentblatt 86/28

(45) Bekanntmachung des Hinweises auf die Patenterteilung:
02.08.89 Patentblatt 89/31

(84) Benannte Vertragsstaaten:
BE CH DE FR GB IT LI SE

(56) Entgegenhaltungen:
DE-A-3 000 802
FR-A-1 192 483
FR-A-1 569 922
GB-A-1 166 429
US-D-561 405

CHEMICAL ABSTRACTS, Band 77, Nr. 8, 21. August
1972, Seite 240, Zusammenfassung Nr. 51950g,
Columbus, Ohio, US; V.V. KONOKOTIN et al.:
"Lowering the gas permeability of plasma arc
sprayed oxide coatings on graphite", & KONSTR.
MATER. OSN. GRAFITA 1971, Nr. 6, 100-7

(73) Patentinhaber: SIGRI GmbH, Werner- von- Siemens-
Strasse 18, D-8901 Meitingen (DE)

(72) Erfinder: Wimmer, Karl, Dipl.- Phys. Dr.,
Südendstrasse 6, D-8851 Nordendorf (DE)
Erfinder: Kühn, Heinrich, Dietkircher- Strasse 6,
D-6259 Brechen (DE)
Erfinder: Stitz, Olaf, Dipl.- Ing., Drosselweg 3,
D-6230 Frankfurt (DE)

EP 0 186 800 B1

**Beschreibung**

Die Erfindung betrifft ein Verfahren zum Schutz von Kohlenstoff- und Graphitelektroden, vor allem gegen Oxidation und Erosion, wobei eine siliciumhaltige Schutzschicht auf die Oberfläche der Kohlenstoff- oder Graphitelektroden aufgebracht wird.

Zum Schutz von Kohlenstoff- und Graphitkörpern vor allem gegen Oxidation und Erosion sind mehrere Verfahren bekanntgeworden, bei welchen die Oberfläche der Körper mit oxidations- und erosionsbeständigen Stoffen beschichtet wird. Beschichtungsmittel sind keramische und metallische Hartstoffe und auch Metalle, falls die Verwendungstemperaturen der beschichteten Körper weniger hoch sind, der Schutz nur für einen bestimmten Temperaturbereich nötig ist oder eine den elektrischen Strom leitende Beschichtung gebraucht wird. Da Metall sich beim Erhitzen wesentlich stärker als Kohlenstoff- und Graphitkörper dehnen und Verbindungen mit Volumenzuwachs gebildet werden können, wodurch die Haftung der Schutzschichten vermindert wird, verwendet man zur Milderung dieser Effekte zweckmäßig Mehrfachschichten aus verschiedenen Metallen, z. B. eine Basisschicht aus Kohlenstoffstahl und eine Deckschicht aus Aluminium (DE-OS-1 758 169). Silicium und bei höheren Temperaturen im Kontakt mit Kohlenstoff gebildetes Siliciumcarbid entspricht in seinem thermischen Verhalten besser den Eigenschaften von Kohlenstoff und Graphit. Aus der Gruppe der metallischen Beschichtungsmittel sind daher vor allem Silicium und im wesentlichen aus Silicium bestehende Stoffgemische wie Ferrosilicium technisch wichtig, die eine vergleichsweise gute Beständigkeit gegen aggressive Agenzien aufweisen und die bei der Erzeugung der Schutzschicht selbst oder durch eine thermische Nachbehandlung ganz oder teilweise in Silciumcarbid übergeführt werden können. Siliciumbeschichteter Kohlenstoff und Graphit ist beispielsweise vorgeschlagen worden für Tiegel und andere metallurgische Gefäße, Elektroden, Wärmeaustauscher, Kernreaktoren, Düsen und Hitzeschilde.

Die Funktionsfähigkeit der auf die Oberfläche von Kohlenstoff- und Graphitkörpern aufgetragenen Schutzschicht wird vor allem durch die Haftfestigkeit der Schicht bestimmt, die besonders bei wiederholten schnellen Temperaturwechseln oft nicht ausreicht. Es kommt zur Ablösung der Schicht oder zur Bildung von Rissen, die den Schutz gegen oxidierende Fluide weitgehend aufheben. Zur Herstellung von den Anforderungen genügenden, im wesentlichen aus Silicium bestehenden Schutzschichten auf Kohlenstoff und Graphit sind zahlreiche Verfahren vorgeschlagen worden. Nach der US-PS-3 275 471 werden Kohlenstoff- und Graphitkörper in eine Aufschlämmung von feinteiligem Silicium-Pulver mit Zusätzen von Siliciumcarbid getaucht und durch Erhitzen der beschichteten Körper wird eine Schutzschicht erzeugt, die aus einer Silicium-Matrix und in der Matrix dispergierte Siliciumcarbid-Partikeln besteht. Nach diesem Verfahren hergestellte Schutzschichten sind vergleichsweise porös und entsprechend für Fluide permeabel. Ähnlich verhalten sich Schichten, die durch Abscheidung von Silicium aus der Dampfphase oder durch Flammspritzen erzeugt werden. Es ist vorgeschlagen worden, durch örtliches Aufschmelzen die Porosität der durch Aufpinseln oder Flammspritzen auf Graphitkörper aufgebrachte Siliciumschicht zu beseitigen oder wenigstens zu verringern (GB-PS-866 818). Bei dieser Behandlung wird auch die Haftfestigkeit der Schicht verbessert, da ein Teil des schmelzflüssigen Metalls in die Poren des Graphitkörpers eindringt und in der Übergangszone Siliciumcarbid gebildet wird. Zur Beschichtung kleinerer Graphitkörper ist es schließlich bekannt, den Körper entlang einer mit schmelzflüssigem Silicium gefüllten Kapillare zu bewegen, wobei die aus der Kapillare austretende Schmelze einen dünnen Film auf der Körperoberfläche bildet. Bei einem anderen Verfahren werden Kohlenstoff- und Graphitkörper bei einer höheren Temperatur in Kontakt mit reaktiven Gasen, z. B. Chlorsilanen mit einer Silicium-Schutzschicht versehen (DE-OS-2 739 258). Auch die nach diesem Verfahren hergestellten Schutzschichten sind nicht frei von Mängeln, insbesondere genügen Haftfestigkeit und Gasdichtigkeit nur zu einem Teil den technischen Anforderungen.

Schließlich ist es bekannt, die Oberfläche von Kohlenstoff und Graphitkörpern durch Plasmaspritzen mit einer im wesentlichen aus metallischem Silicium bestehenden Schutzschicht zu versehen (DE-OS-1 671 065, DE-PS-1 271 007). Die Porosität der durch Plasmaspritzen hergestellten Schutzschichten ist kleiner als die Porosität anderer Schichten, ausgenommen CVD-Schichten, ohne daß die Diffusion oxidierender Fluide durch die Schicht ausreichend gehemmt wird. Auch für dieses Beschichtungsverfahren werden entsprechend das Aufbringen mehrerer Schichten, das Aufschmelzen der Schutzschicht oder ihre Versiegelung mit glasartigen Stoffen als Mittel für die notwendige Verringerung der Permeabilität vorgesehen. Durch die DE-OS-3 000 802 ist schließlich bekannt, reinste, für Solarzellen geeignete Siliciumschichten durch Zersetzung von Siliciumverbindungen in einem Plasma zu erzeugen. Das Silicium wird in einem Gasstrom, der aus Wasserstoff und Inertgas bestehen kann, gegebenenfalls bei reduziertem atmosphärischem Druck auf einen Träger gespritzt, der beispielsweise aus Graphit oder Keramik besteht. Über die Haftung der Silciumschicht auf dem Träger und die Dichtigkeit der Schicht, kurz ihre Eignung als Schutzschicht für Kohlenstoff- und Graphitelektroden ist nichts bekannt.

Der Erfindung liegt entsprechend die Aufgabe zugrunde, die Verfahren zur Herstellung von im wesentlichen aus Silicium bestehenden Schutzschichten auf Kohlenstoff- und Graphitelektroden zu vereinfachen und zu verbessern, so daß in einer einzigen Verfahrensstufe eine im wesentlichen gasundurchlässige auf der Körperoberfläche fest haftende Schutzschicht erzeugt wird.

Die Aufgabe wird mit einem Verfahren der eingangs genannten Art dadurch gelöst, daß unter Verwendung eines Silicium-Pulvers mit einer Korngröße unterhalb 0,05 mm und eines Inertgas-Wasserstoff-Gemischs als Plasmagas bei einem atmosphärischen Druck von höchstens 200 h Pa auf der Oberfläche des Kohlenstoff- oder Graphitkörpers eine 0,1 bis 0,5 mm dicke Schicht aus im wesentlichen metallischem Silicium erzeugt wird, deren Dichte wenigstens 95 % der theoretischen Dichte beträgt.

Der Erfindung liegt die überraschende Erkenntnis zugrunde, daß anspruchsgemäß hergestellte Schichten impermeabel für Fluide sind, auf Kohlenstoff- oder Graphitkörpern gut haften und die Körper wirksam gegen den Angriff korrosiver Stoffe schützen. Der Schutz wird in einem einzigen Arbeitsgang erzielt, so daß Mehrfachbeschichtungen, das wenigstens partielle Aufschmelzen der Schicht oder das Aufbringen besonderer Versiegelungsmassen entfallen können. Ein anderer Vorteil ist die geringe Streuung der Schichtbeschaffenheit und entsprechend die kleine Streuung ihrer Lebensdauer. Die Effekte dürften im wesentlichen darauf zurückgehen, daß die Siliciumartikel nicht oxidiert werden und eine größere Geschwindigkeit erreichen, als beim Plasmaspritzen unter Normaldruck. Beide Faktoren begünstigen die Ausbildung einer duktileren, eng mit dem Oberflächenrelief des Kohlenstoffs bzw. Graphits verzahnten Schutzschicht. Die Korngröße des zur Beschichtung verwendeten Silicium-Pulvers sollte nicht mehr als 0,05 mm betragen, da mit Körnungen oberhalb dieses Grenzwerts die Permeabilität der Schicht wächst und ihre Haftfestigkeit abnimmt. Besonders günstig in bezug auf die Gleichförmigkeit der Schichtausbildung sind Kornfraktionen mit Korngrößen von 0,02 bis 0,04 mm. Unter dem Terminus "Silicium-Pulver" sind außer reinem Silicium technische Siliciumsorten mit einem kleineren oder größeren Gehalt an Verunreinigungen, besonders auch siliciumreiche Ferrosilicium-Sorten und Legierungen zu verstehen, die zum überwiegenden Teil aus Silicium bestehen und unter den beanspruchten Bedingungen eine impermeable festhaftende Schicht ergeben. Als Plasmagas wird insbesondere ein Gemisch aus Argon und Wasserstoff verwendet, bevorzugt beträgt das Volumenverhältnis 60 bis 70 Argon und 40 bis 30 % Wasserstoff. Bei dieser Zusammensetzung des Plasmagases werden Oxidschichten auf den Siliciumpartikeln im wesentlichen reduziert und die für die Schichtqualität nötige Duktilität des Metalls eingestellt. Der atomsphärische Druck in der Beschichtungskammer soll 200 h Pa nicht überschreiten, da bei höherem Druck die Schutzschicht für Fluide durchlässig wird und auch ihre Haftfestigkeit mangelhaft ist. Mit abnehmendem atmosphärische Druck steigt zwangsläufig der technische Aufwand, ohne daß sich die Qualität der Schutzschicht wesentlich ändert. Der kleinste auf die Schichtgüte bezogene technische Aufwand wird mit Drücken von 50 bis 100 h Pa erzielt.

Zur Herstellung eines impermeablen Schutzes von Kohlenstoff- und Graphitkörpern muß Silicium in einer mittleren Schichtdicke von wenigstens 0,1 mm auf die Oberfläche aufgetragen werden. Die verhältnismäßig große Schichtdicke ist wegen der Oberflächenprofilierung, die auf die Porosität der Körper zurückgeht, und der geometrischen Zuordnung von Oberfläche und Plasmadüse nötig. Mit steigender Schichtdicke wachsen die als Folge von Temperaturänderungen oder -gradienten in der Schicht gebildeten mechanischen Spannungen, da die Ausdehnungskoeffizienten von Schutzschicht und Kohlenstoff- bzw. Graphitkörpern verschieden sind. In der Folge bilden sich in der Schutzschicht Risse, durch die Sauerstoff und andere schädliche Fluide die Schicht durchdringen. Die maximale Schichtdicke soll deshalb höchstens 0,5 mm betragen. Besonders günstig sind Schutzschichten mit einer mittleren Dicke zwischen 0,25 und 0,35 mm, wobei die Dichte der Schicht wenigstens 95 % der theoretischen Dichte betragen soll. Bei einer Dichte oberhalb 95 % der theoretischen Dichten erstrecken sich in der Schutzschicht enthaltene Poren nicht über die gesamte Dicke der Schicht, so daß die Restporosität die Funktionsfähigkeit der Beschichtung nicht beeinträchtigt. Gegebenenfalls kann es von Vorteil sein, die Zusammensetzung der Schicht während ihrer Entstehung zu ändern, so daß beispielsweise die Basis der Schicht aus reinem Silicium und ihre Oberfläche aus einer Siliciumlegierung besteht. Unter bestimmten Verwendungsbedingungen können derartige Legierungen beständiger sein als reines Silicium, das andererseits gut auf der Kohlenstoffoberfläche haftet. Konzentrationsgradienten in der Schicht werden durch Änderungen der Pulverzusammensetzung während der Beschichtung erzeugt.

Das anmeldungsgemäße Verfahren ist zur Beschichtung beliebig geformter Kohlenstoff- und Graphitkörpern geeignet, z. B. von Lichtkohlen, Graphittiegeln für die Herstellung von Halbleitern, Blockwärmeaustauschern aus Graphit. Besonders vorteilhaft eignet sich das Verfahren zur Beschichtung der Abschnitte von Graphitelektroden für Lichtbogenöfen, die zu einem durchgehenden Strang verschraubt werden. Die Beschichtungen sind wegen des schnellen Erhitzens und Abkühlens der Elektrode besonders großen thermischen Spannungen ausgesetzt und müssen einer aggresiven Atmosphäre widerstehen. Die nach dem anmeldungsgemäßen Verfahren auf Graphitelektroden aufgebrachten Silicium-Schutzschichten sind stabil, lösen sich nicht von der Elektrodenoberfläche und schirmen die Elektrode gegen Fluide ab.

Zur Beschichtung von Kohlenstoff- oder Graphitkörpern, z. B. einer Elektrode, werden die Körper, gegebenenfalls nach einer Aufrauhung der zu beschichtenden Fläche, einer Reinigung oder Vorentgasung, in eine Beschichtungskammer eingebracht und gelagert. Körper und Plasmadüse sind gegeneinander verschiebbar und drehbar. Die Kammer wird dann auf etwa 1 Pa evakuiert und mit Argon geflutet, wobei der atmosphärische Druck auf höchstens 200 h Pa, bevorzugt auf 50 bis 100 h Pa ansteigt. Gleichzeitig wird der Plasmabogen gezündet. Die Bogenspannung beträgt etwa 68 V, das Plasmagas besteht aus einem Argon-Wasserstoff-Gemisch mit 60 bis 70 Vol.% Argon, Rest Wasserstoff. Silicium-Pulver mit einer Korngröße kleiner als 0,05 mm wird in das Plasma geblasen und auf der Kohlenstoff- bzw. Graphitfläche abgeschieden, die in einer Entfernung von etwa 250 bis 300 mm von der Plasma-Düse angeordnet ist. Bei einer Leistung von 60 kW und einem Plasmagasfluß von ca. 50 l/min beträgt der Pulverdurchsatz etwa 100 g/min. Durch die gleichzeitige Verwendung mehrerer Plasmadüsen läßt sich die Beschichtungsleistung in weiten Grenzen den technischen Anforderungen anpassen.

Die Erfindung wird nachstehend anhand von Beispielen beschrieben. Abschnitte für eine Graphitelektrode mit einem Durchmesser von 500 mm wurden durch Drehen und Sandstrahlen aufgerauht, wobei eine mittlere

3

Rauhtiefe von etwa 0,05 bis 0,09 mm erzeugt wurde. Die Abschnitte wurden in eine Beschichtungskammer eingesetzt und wie folgt mit einer Schicht aus im wesentlichen Silicium versehen. Der Abstand Plasmadüse-Graphitkörper betrug jeweils 270 mm.

| Probennummer | 1 | 2 | 3 | 4 | 5 | 6 |
|---|---|---|---|---|---|---|
| atm. Druck in der Beschichtungskammer h Pa | 50 | 100 | 100 | 100 | 200 | 500 |
| Spritzpulver | Rein-silicium | Rein-silicium | techn. Silicium | Ferrosili-cim(80 % Si) | techn. Silicium | techn. Silicium |
| Korngröße mm | 0,02-0,04 | 0,02-0,04 | 0,05-0,10 | 0,03-0,05 | 0,02-0,04 | 0,02-0,04 |
| Plasmagas | 60 % Ar 40 % H | 70 % Ar 30 % H | 60 % Ar 40 % H | 60 % Ar 40 % H | 100 % Ar | 60 % Ar 40 % H |
| el. Leistung kW | 57 | 57 | 80 | 70 | 60 | 60 |
| Bogenspannung V | 65 | 68 | 68 | 70 | 60 | 68 |
| Pulverdurchsatz g/min | 95 | 95 | 130 | 120 | 100 | 100 |
| Schichtdicke mm | 0,20 | 0,25 | 0,60 | 0,35 | 0,30 | 0,30 |
| relative Dichte | 0,98 | 0,98 | 0,95 | 0,96 | 0,92 | 0,95 |

Die beschichteten Abschnitte wurden als Teile von Graphitelektroden in einem Lichtbogenofen, max. Transformator-Leistung 20 MVA, vergleichend getestet. Die Elektroden sind dem Angriff oxidierender Gase, von Schlacke usw. ausgesetzt und der als Mantelabbrand bezeichnete Verlust beträgt für ungeschützte Elektroden etwa 40 bis 50 % des gesamten Elektrodenverbrauchs.

| Probennummer | 1 | 2 | 3 | 4 | 5 | 6 |
|---|---|---|---|---|---|---|
| rel. geschütze Länge* | 1 | 1 | 0,8 | 1 | 0,7 | 0,8 |
| rel. Mantelabbrand ** | 0,6 | 0,6 | 0,8 | 0,6 | 0,9 | 0,8 |

\* - Länge des Elektrodenteils unterhalb des Ofendeckels im Gleichgewicht, der eine festhaftende Schutzschicht aufweist.
\** - bezogen auf die ungeschützte Elektrode

In der Schutzschicht von Probe 3 bildeten sich beim Aufheizen des Elektrodenstrangs Risse und der eindiffundierende, mit dem Kohlenstoff reagierende Sauerstoff führte zu Aushöhlungen zwischen Schutzschicht und Graphitkörper. Die Schutzschichten der Proben 5 und 6 waren aufgrund ihrer Porosität permeabel und die Haftung der Schichten war vergleichsweise schlecht.

**Patentansprüche**

1. Verfahren zum Schutz von Kohlenstoff- und Graphitelektroden, vor allem gegen Oxidation und Erosion, wobei eine siliciumhaltige Schutzschicht auf die Oberfläche der Kohlenstoff- oder Graphitelektroden durch Plasmaspritzen aufgebracht wird,
dadurch gekennzeichnet,
daß unter Verwendung eines Silicium-Pulvers mit einer Korngröße unterhalb 0,05 mm und eines Inertgas-Wasserstoff-Gemischs als Plasmagas bei einem atmosphärischen Druck von höchstens 200 h Pa auf der Oberfläche eine 0,1 bis 0,5 mm dicke Schicht erzeugt wird, deren Dichte wenigstens 95 % der theoretischen Dichte beträgt.
2. Verfahren nach Patentanspruch 1,
dadurch gekennzeichnet,
daß Silicium-Pulver mit einer Korngröße von 0,02 bis 0,04 mm verwendet wird.
3. Verfahren nach den Patentansprüchen 1 und 2,
dadurch gekennzeichnet,
daß als Plasmagas ein Argon-Wasserstoff-Gemisch verwendet wird.
4. Verfahren nach den Patentansprüchen 1 bis 3,
dadurch gekennzeichnet,
daß als Plasmagas ein Gemisch aus 60 bis 70 Vol.-% Argon und 40 bis 30 Vol.-% Wasserstoff verwendet wird.

5. Verfahren nach den Patentansprüchen 1 bis 4,
dadurch gekennzeichnet,
daß ein atmosphärischer Druck von 50 bis 100 h Pa verwendet wird.

6. Verfahren nach den Patentansprüchen 1 bis 5,
dadurch gekennzeichnet,
daß Schutzschichten mit einer Dicke von 0,25 bis 0,35 mm erzeugt werden.

7. Verfahren nach den Patentansprüchen 1 bis 6,
dadurch gekennzeichnet,
daß Schutzschichten erzeugt werden, deren Zusammensetzungen sich über ihre Dicke ändert.

8. Verfahren nach den Patentansprüchen 1 bis 7,
dadurch gekennzeichnet,
daß die Oberfläche der Elektroden vor dem Beschichten aufgerauht wird.

9. Verwendung des Verfahrens nach Patentanspruch 1 zur Beschichtung von Graphitelektroden-Abschnitten für Lichtbogenöfen.

## Revendications

1. Procédé pour protéger des électrodes en carbone et des électrodes en graphite, surtout contre l'oxydation et l'érosion, procédé dans lequel une couche de protection contenant du silicium est déposée sur la surface des électrodes en carbone ou en graphite, par projection de plasma, procédé caractérisé en ce qu'en utilisant une poudre de silicium avec une grosseur de grains inférieure à 0,05 mm et un mélange de gaz inerte et d'hydrogène en tant que plasma, à une pression atmosphérique atteignant tout au plus 200 h Pa, une couche de 0,1 à 0,5 mm d'épaisseur est obtenue sur la surface des électrodes, la densité de cette couche correspondant à au moins 95 % de la densité théorique.

2. Procédé selon la revendication 1, caractérisé en ce qu'on utilise une poudre au silicium avec une grosseur de grains de 0,02 à 0,04 mm.

3. Procédé selon les revendications 1 et 2, caractérisé en ce qu'on utilise comme gaz de plasma un mélange d'argon et d'hydrogène.

4. Procédé selon les revendications 1 à 3, caractérisé en ce qu'on utilise comme gaz de plasma un mélange de 60 à 70 volumes% d'argon et de 40 à 30 volumes % d'hydrogène.

5. Procédé selon les revendications 1 à 4, caractérisé en ce qu'on utilise une pression atmosphérique de 50 à 100 h pa.

6. Procédé selon les revendications 1 à 5, caractérisé en ce que les couches de protection sont obtenues avec une épaisseur de 0,25 à 0,35 mm.

7. Procédé selon les revendications 1 à 6, caractérisé en ce qu'on obtient des couches de protection dont les compositions varient en fonction de leur épaisseur.

8. Procédé selon les revendications 1 à 7, caractérisé en ce que la surface des électrodes est rendue rugueuse avant le revêtement

9. Mise en oeuvre du procédé selon la revendication 1 pour revêtir des tronçons d'électrode de graphite pour des fours à arc électrique.

## Claims

1. Process for the protection of carbon and graphite electrodes, primarily against oxidation and erosion, wherein a silicon-containing protective layer is applied to the surface of the carbon or graphite electrode by plasma spraying, characterised in that a 0.1 to 0.5 mm thick layer is produced on the surface with use of a silicon powder with a particle size below 0.05 mm and an inert gas hydrogen mixture as plasma gas at an atmospheric pressure of at most 200 h Pa, the density of which layer amounts to at least 95 % of the theoretical density.

2. Process according to claim 1, characterised in that silicon powder with a particle size of 0.02 to 0.04 mm is used.

3. Process according to claims 1 and 2, characterised in that an argon-hydrogen mixture is used as plasma gas.

4. Process according to claims 1 to 3, characterised in that a mixture of 60 to 70 % by volume of argon and 40 to 30 % by volume of hydrogen is used as plasma gas.

5. Process according to claims 1 to 4, characterised in that an atmospheric pressure of 50 to 100 h Pa is used.

6. Process according to claims 1 to 5, characterised in that protective layers with a thickness of 0.25 to 0.35 mm are produced.

7. Process according to claims 1 to 6, characterised in that protective layers are produced whose composition varies over their thickness.

8. Process according to claims 1 to 7, characterised in that the surface of the electrodes is roughened before coating.

9. Use of the process according to claim 1 for the coating of graphite electrode sections for arc furnaces.